# EUROPÄISCHE PATENTSCHRIFT

(11) **EP 0 953 127 B1**
(45) Veröffentlichungstag und Bekanntmachung des Hinweises auf die Patenterteilung: **19.10.2005**
(21) Anmeldenummer: 98963485.2
(22) Anmeldetag: 19.11.1998
(51) Int. Cl.: F16M 11/06

(54) **GELENK FÜR EIN STATIV**
ARTICULATED ELEMENT FOR A SUPPORT
ELEMENT ARTICULE POUR SUPPORT

(30) Priorität: 19.11.1997 DE 19751313; 19.05.1998 DE 29809454 U
(43) Veröffentlichungstag der Anmeldung: 03.11.1999
(73) Patentinhaber: Wella Aktiengesellschaft, 64274 Darmstadt (DE)
(72) Erfinder: SCHMITT, Bernd, D-36088 Hünfeld-Michelsrombach (DE); WEIGL, Rainer, D-36039 Fulda-Aschenberg (DE)
(86) Internationale Anmeldenummer: PCT/EP1998/007420
(87) Internationale Veröffentlichungsnummer: WO 1999/026016

(56) Entgegenhaltungen:
- DE-B- 1 198 302
- GB-A- 1 320 562
- US-A- 3 584 793
- US-A- 4 107 769

## Beschreibung

Die Erfindung betrifft ein Gelenkteil für ein Stativ nach der Gattung des Oberbegriffs des Anspruchs 1.

Ein die Gattung bildendes Gelenk für ein Stativ ist aus der GB 1 320 562 bekannt. Hierbei ist ein Gelenkteil für das Stativ mit einem axial verdreh- und höhenverschwenkbaren Gelenkarm vorgesehen, wobei das Gelenkteil einen Drehzapfen aufweist, der mittels eines Verbindungsteils an einem Träger mit diesem verbindbar ist, wobei das Gelenkteil ein Neiggelenk für den Gelenkarm aufweist, wobei das Neiggelenk zwei aus Metallblech bestehende Lagerscheiben aufweist, die in etwa mittig eine Öffnung aufweisen, wobei die Lagerscheiben in einem parallelen Abstand in das Gelenkteil eingebettet sind.

Diese beiden Lagerscheiben sind einerseits als Tellerfedern für eine Friktion ausgebildet und dienen andererseits als Gelenklager für den Gelenkarm, wobei beim Verstellen des Gelenkarms sich die Tellerfedern mitdrehen. Durch diesen konstruktiven Aufbau ist nur eine sehr beschränkte Tragbelastung des Gelenkarm möglich.

Aufgabe der Erfindung ist es, ein gattungsgleiches Gelenkteil zu schaffen, welches eine wesentlich höhere Tragbelastung ermöglicht und kostengünstig in der Herstellung ist.

Diese Aufgabe wird nach den kennzeichnenden Merkmalen des Anspruchs 1 gelöst. Vorteilhafte Weiterbildungen der Erfindung gehen aus den Unteransprüchen sowie aus den Figuren hervor.

Ein Ausführungsbeispiel geht aus den Figuren 1 bis 17 näher hervor.

Es zeigt:
- Figur 1: in einer Seitenansicht ein komplettes Stativ;
- Figur 2 bis 5: in verschiedenen Ansichten ein Gelenkteil, wobei ein Schnitt A-A nach der Figur 3 in der Figur 2 und ein Schnitt B-B nach der Figur 2 in der Figur 4 dargestellt ist;
- Figur 6: in einer Draufsicht eine einzelne Lagerscheibe;
- Figur 7: in einer Teilansicht das Gelenkteil mit eingebetteten Lagerscheiben;
- Figur 8: in einer Schnittdarstellung die Ansicht nach der Figur 7;
- Figur 9: in einer Vergrößerung das Detail X nach der Figur 8;
- Figur 10: in einer Schnittdarstellung den Schnitt C-C nach der Figur 8 ohne Verbindungsteil;
- Figur 11: in einer Vergrößerung das Detail Y nach der Figur 10;
- Figur 12: eine Draufsicht auf ein Verkleidungsteil;
- Figur 13: eine Schnittdarstellung nach dem Schnitt D-D der Figur 12;
- Figur 14: in einer Vergrößerung das Detail Z nach der Figur 13;
- Figur 15: in einer Schnittdarstellung den Schnitt E-E nach der Figur 16;
- Figur 16: eine Draufsicht auf einen Gelenkarmverschlußteil, und
- Figur 17: eine Seitenansicht nach der Figur 16.

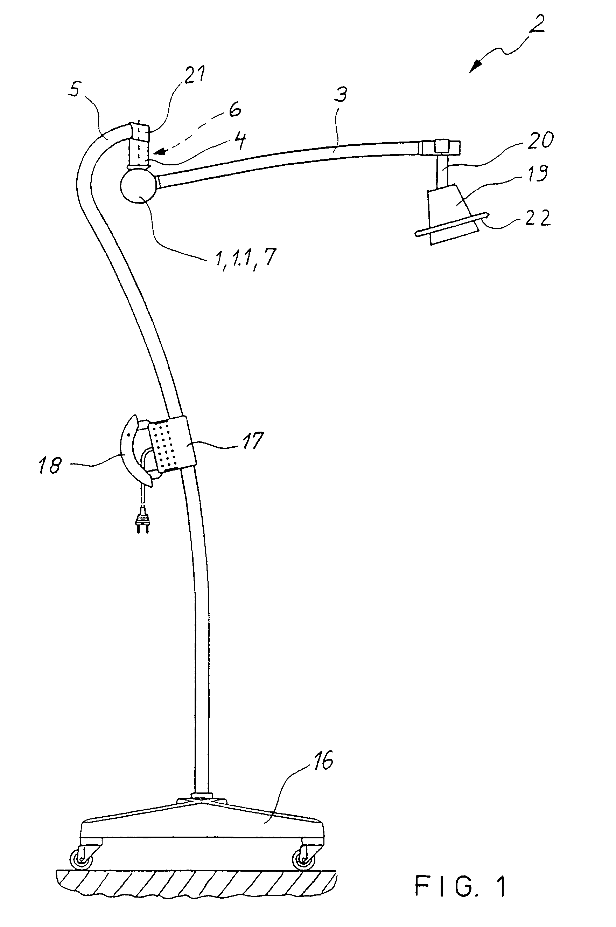

Figur 1 zeigt ein Gelenkteil 1 für ein Stativ 2 mit einem axial verdreh- und höhenverschwenkbaren Gelenkarm 3. Das Gelenkteil 1 weist einen Drehzapfen 6 auf, der mittels eines Verbindungsteils 4 an einem Träger 5 mit diesem verbindbar ist. Das Gelenkteil 1 ist mit einem Neiggelenk 7 für den Gelenkarm 3 versehen. Das Stativ 2 ist mit einem fahrbaren Fuß 16, einem Niederspannungstransformator 17 mit einem Griff 18 und mit einem verstellbaren Leuchtenkopf 19 versehen. Der Transformator 17 versorgt über ein innerhalb des Trägers 5, des Verbindungsteils 4, des Gelenkteils 1, des Gelenkarms 3 und einer Leuchtenkopfverbindung 20 angeordneten Kabels eine nichtdargestellte Lampe (zum Beispiel Halogenlampe 12 V/50 W). Das obere Ende des Verbindungsteils 4 und das Ende des Trägers 5 ist mit einer Kappe 21 aus Kunststoff abgeschlossen. Der Leuchtenkopf 19 ist zweckmäßigerweise mit einem Verstellgriff 22 versehen.

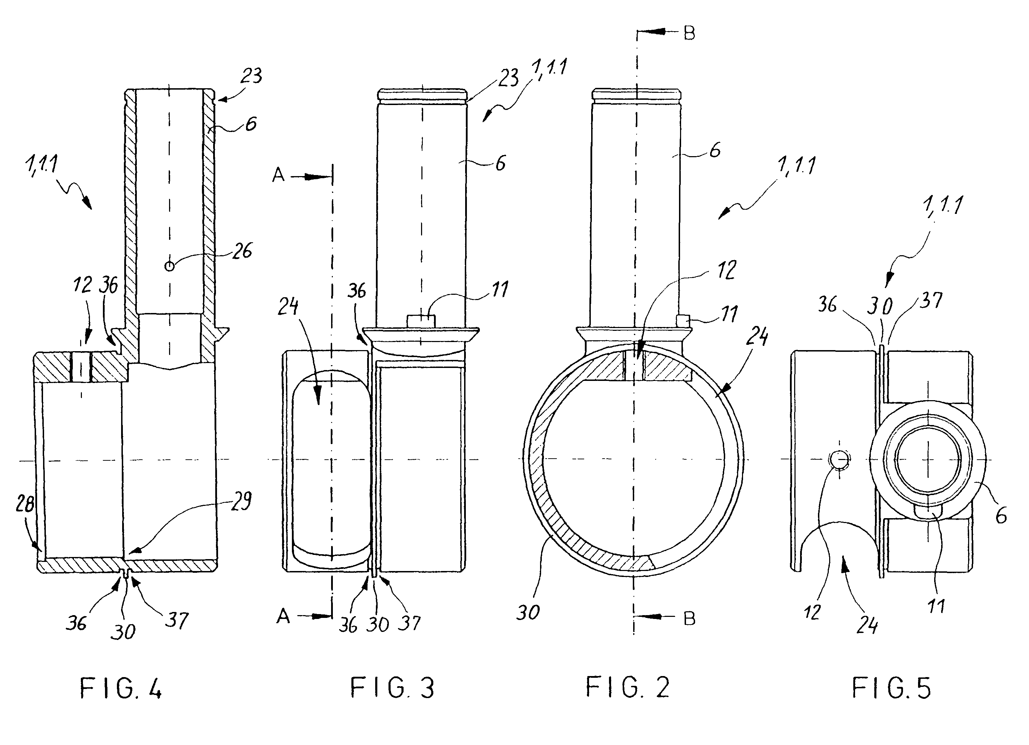

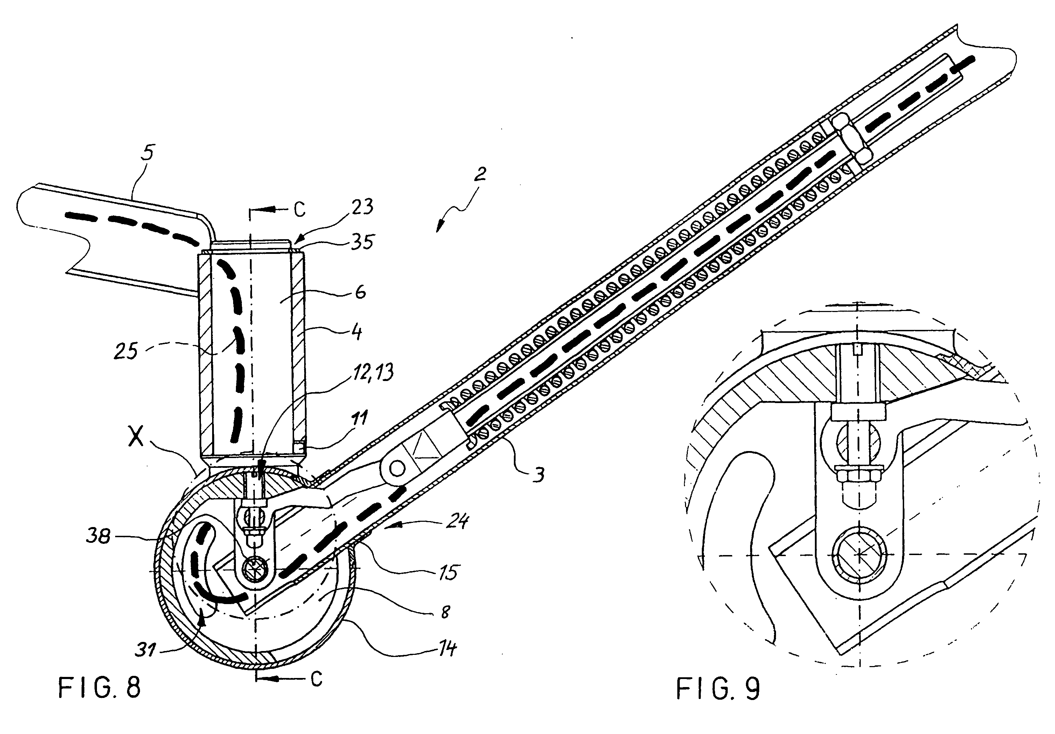

Das in der Figur 2 dargestellte Gelenkteil 1 besteht im wesentlichen aus einem einteiligen Kunststoffspritzteil 1.1, das mit einem umspritzten Gewindeeinsatz 12 für eine Federkraftverstelleinrichtung 13 (Figuren 8 bis 11) versehen ist. Das Gelenkteil 1 ist mit einem Drehzapfen 6 versehen, der am Anfang einen Drehanschlag 11 und am Ende eine Ringnut 23 aufweist.

Aus der Figur 3 - die gegenüber der Figur 2 um 90 Grad verdreht ist - geht näher eine Gelenkarmöffnung 24 hervor.

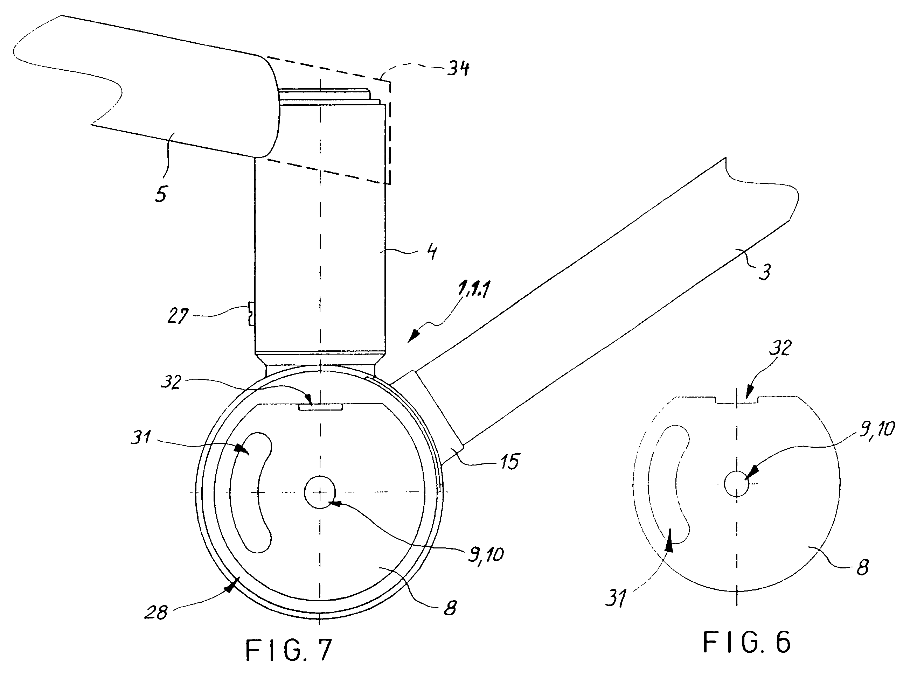

Aus der Figur 4 geht hervor, daß das Gelenkteil 1, 1.1 im wesentlichen hohl ist, insbesondere der Drehzapfen 6, der gleichzeitig einen Kanal für ein in der Figur 8 angedeutetes Kabel 25 bildet. Für eine Federkrafteinstelleinrichtung 13 (Figur 8 usw.) ist ein umspritzter Gewindeeinsatz 12 vorgesehen. Ein axiales Befestigen des Gelenkarms 3 ist mittels einer Bohrung 26 und einer dazu korrespondierenden Schraube 27 (Figur 7) am Verbindungsteil 4 möglich. Zur Aufnahme von zwei Lagerscheiben 8 (Figur 6) sind zwei Lagerscheibenaufnahmen 28, 29 vorgesehen.

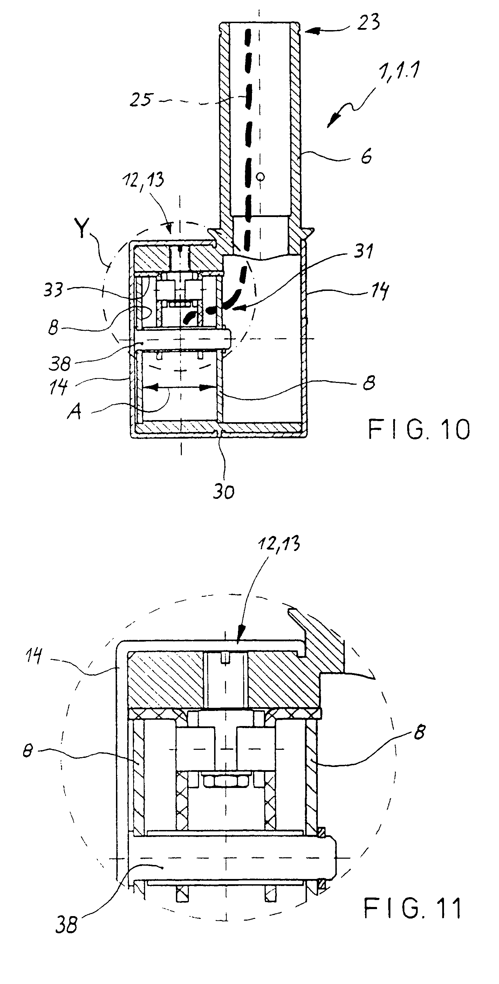

Eine Draufsicht auf das Gelenkteil 1, 1.1 nach der Figur 3 ist in der Figur 5 dargestellt. Hieraus geht insbesondere die Gelenkarmöffnung 24 näher hervor. Außerdem wird hier eine Anschlagrippe 30 verdeutlicht, die als Ansetzbegrenzung der Verkleidungsteile 14 (Figur 10) dient. Beidseitig der Anschlagrippe 30 sind Rastnuten 36, 37 zum Einrasten der Verkleidungsteile 14 angeordnet.

Eine einzelne Lagerscheibe 8 ist in der Figur 6 dargestellt. Die Lagerscheibe 8 ist mit einer Öffnung 9 für ein Gelenklager 10 vorgesehen. Für einen Durchtritt eines Versorgungskabels 25 durch das Gelenkteil 1, 1.1 ist ein koaxiales Langloch 31 angeordnet. Kostengünstig lassen sich die Lagerscheiben 8 durch Stanzen herstellen, insbesondere dann, wenn die Scheiben 8 identisch sind. Eine Ausnehmung 32 dient als Aufnahme eines Führungswinkels 33 (Figuren 10 und 11).

Figur 7 zeigt in einer Teilansicht das Stativ 2, bei dem das Gelenkteil 1, 1.1 mit dem Verbindungsteil 4 und dem Gelenkarm 3 verbunden ist. Zusätzlich ist die in die Lagerscheibenaufnahme 28 eingebettete Lagerscheibe 8 und eine gestrichelt angedeutete Abdeckung 34 dargestellt. Außerdem ist eine Gelenkarmverkleidung 35 (dargestellt in den Figuren 15, 16, 17) angeordnet, die bei jeder Neigstellung die Gelenkarmöffnung 24 abdeckt.

Die Figur 8 zeigt eine Schnittansicht mit den gesamten Einzelteilen. Insbesondere wird hieraus die Federkrafteinstelleinrichtung 13 und die stark gestrichelt angedeutete Führung des Kabels 25 verdeutlicht. Durch einen in der Nut 23 angeordneten Haltering 35 wird der Drehzapfen 6 samt Gelenkarm 3 getragen. Ein vergrößerter Ausschnitt X ist in der Figur 9 dargestellt.

Die Fig. 10 zeigt in einer Gesamtschau das Gelenkteil 1 für ein Stativ 2 mit einem axial verdreh- und höhenverschwenkbaren Gelenkarm 3, wobei das Gelenkteil 1 einen Drehzapfen 6 aufweist, der mittels eines Verbindungsteils 4 an einem Träger 5 mit diesem verbindbar ist, wobei das Gelenkteil 1 ein Neiggelenk 7 für den Gelenkarm 3 aufweist, wobei das Neiggelenk 7 zwei aus Metallblech bestehende Lagerscheiben 8 aufweist, die in etwa mittig eine Öffnung 9 aufweisen, wobei die Lagerscheiben 8, 8 in einem parallelen Abstand A in das Gelenkteil 1 eingebettet sind. Das Gelenkteil 1 besteht aus einem einteiligen Kunststoffspritzteil 1.1, das den Drehzapfen 6 und das Gehäuse des Neiggelenks 7 bildet und in dem die Lagerscheiben 8 verdrehsicher eingebettet sind, deren Öffnungen 9 mit einem Gelenkstift 38 ein Gelenklager 10 für das Neiggelenk 7 bilden.

Aus der Figur 10 geht insbesondere die Lage der beiden Lagerscheiben 8, 8 hervor, die in einem parallelen Abstand A im Gelenkteil 1, 1.1 eingebettet sind, wobei die Öffnungen 9, 9 ein Gelenklager 10 für das Neiggelenk 7 mittels eines lagegesicherten Gelenkstiftes 38 bilden. Außerdem geht die Befestigung (Verrastung) der beiden Verkleidungsteile 14, 14 an dem Gelenkteil 1, 1.1 näher hervor, wobei das Verkleidungsteil 14 unterhalb des Drehzapfens 6 fest verrastet ist, dreht sich das Verkleidungsteil 14 des Gelenklagers 10 mit den Bewegungen des Gelenkarms 3.

Eine Detailvergrößerung Y ist in der Figur 11 dargestellt.

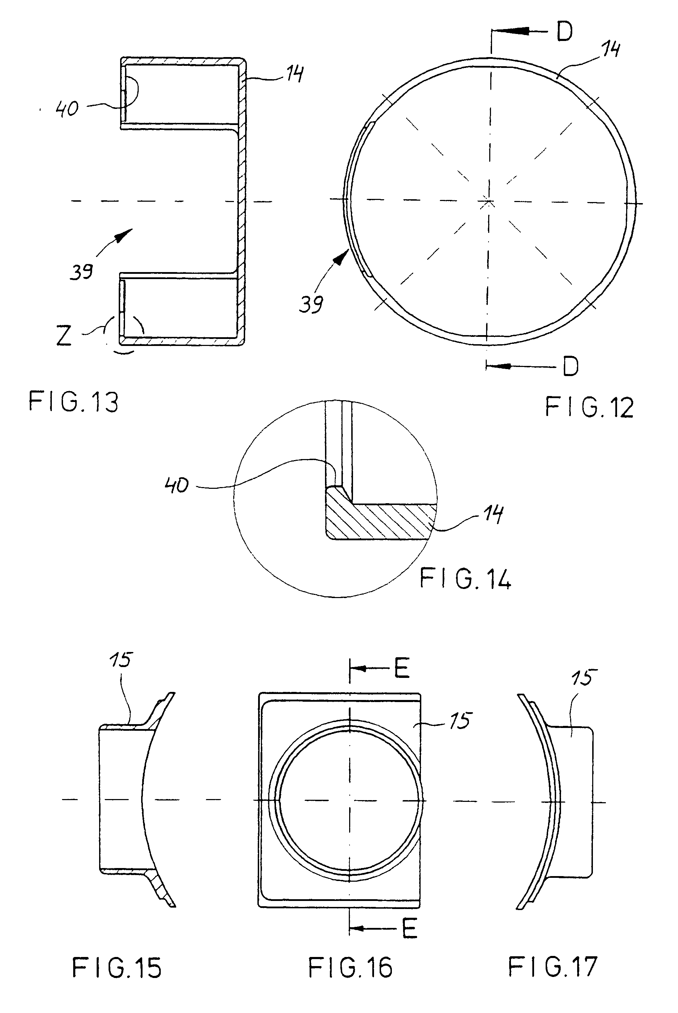

Eine Draufsicht auf das Verkleidungsteil 14 zeigt die Figur 12. Das Verkleidungsteil 14 ist schalenartig ausgestaltet und weist eine Ausnehmung 39 auf, die als Durchlaß für das Verbindungsteil 4 bzw. für den Gelenkarm 3 dient, da beide Verkleidungsteile 14, 14 (Figur 10) identisch sind. Zum Verrasten mit den Nuten 36, 37 (Figur 5 usw.) sind Vorsprünge 40 vorgesehen.

Figur 13 zeigt den Schnitt D-D nach der Figur 12. Eine Detailvergrößerung Z ist in der Figur 14 dargestellt.

In den Figuren 15, 16, 17 ist das Gelenkarmverschlußteil 15 näher dargestellt.

Zusammenfassend ergeben sich mit der Erfindung folgende Vorteile:
- Das Gelenkteil ist ein kostengünstiges Kunststoffspritzteil.
- Durch die Werkstoffpaarung Kunststoff (Drehzapfen 6) und Stahl (Verbindungsteil 4 bzw. Lager) ist kein zusätzlicher Lageraufwand erforderlich.
- Die beiden relativ großen Lagerscheiben 8, 8 versteifen zusätzlich das Kunststoffspritzteil 1.1 und verteilen großflächig auftretende Kräfte.
- Kostengünstige Herstellung der gestanzten, identischen Lagerscheiben.
- Beide Verkleidungsteile 14 bestehen aus Kunststoff und sind miteinander identisch (Kostenvorteil).
- Durch wahlweise Farbgebung der Kunststoffteile keine nachträgliche Farblackierung erforderlich.
- Keine Nachbearbeitung der Einzelteile erforderlich.
- Wahlweise einfache Kraftverstellung von außen.

## Patentansprüche

1. Gelenkteil (1) für ein Stativ (2) mit einem axial verdreh- und höhenverschwenkbaren Gelenkarm (3), wobei das Gelenkteil (1) einen Drehzapfen (6) aufweist, der mittels eines Verbindungsteils (4) an einem Träger (5) mit diesem verbindbar ist, wobei das Gelenkteil (1) ein Neiggelenk (7) für den Gelenkarm (3) aufweist, wobei das Neiggelenk (7) zwei aus Metallblech bestehende Lagerscheiben (8) aufweist, die in etwa mittig eine Öffnung (9) aufweisen, wobei die Lagerscheiben (8, 8) in einem parallelen Abstand (A) in das Gelenkteil (1) eingebettet sind,
**dadurch gekennzeichnet,**
**daß** das Gelenkteil (1) aus einem einteiligen Kunststoffspritzteil (1.1) besteht, das den Drehzapfen (6) und das Gehäuse des Neiggelenks (7) bildet und in dem die Lagerscheiben (8) verdrehsicher eingebettet sind, deren Öffnungen (9) mit einem Gelenkstift (38) ein Gelenklager (10) für das Neiggelenk (7) bilden.

2. Gelenkteil nach Anspruch 1, **dadurch gekennzeichnet, daß** mindestens eine Lagerscheibe (8) ein koaxiales Langloch (31) aufweist.

3. Gelenkteil nach Anspruch 1, **dadurch gekennzeichnet, daß** die Lagerscheiben (8) gestanzt sind.

4. Gelenkteil nach Anspruch 1, **dadurch gekennzeichnet, daß** die Lagerscheiben (8) identisch sind.

5. Gelenkteil nach Anspruch 1, **dadurch gekennzeichnet, daß** der Drehzapfen (6) mit einem Drehanschlag (11) versehen ist.

6. Gelenkteil nach Anspruch 1, **dadurch gekennzeichnet, daß** das Kunststoffspritzteil (1.1) mit einem umspritzten Gewindeeinsatz (12) versehen ist für eine Federkrafteinstelleinrichtung (13).

7. Gelenkteil nach Anspruch 1, **dadurch gekennzeichnet, daß** die Lagerscheiben (8) von jeweils einem identischen Verkleidungsteil (14, 14) abgedeckt sind.

8. Gelenkteil nach Anspruch 1, **dadurch gekennzeichnet, daß** das Kunststoffspritzteil (1.1) mit einem Gelenkarmverschlußteil (15) versehen ist.

## Claims

1. Articulated part (1) for a stand (2) having an axially rotatable and vertically swivelable articulated arm (3), the articulated part (1) having a pivot pin (6) connectable by means of a connection part (2) to a carrier (5), the articulated part (1) having a tilting joint (7) for the articulated arm (3), the tilting joint (7) having two bearing discs (8) consisting of sheet metal and having an opening (9) substantially in the centre, the bearing discs (8, 9) being embedded at a parallel distance (A) in the articulated part (1),
**characterized in that** the articulated part (1) consists of a one-piece plastic injection-moulded part (1.1) which forms the pivot pin (6) and the housing of the tilting joint (7) and in which the bearing discs (8), whose openings (9) combine with a hinge pin (38) to form a joint bearing (10) for the tilting joint (7), are embedded so as to be fixed with respect to rotation.

2. Articulated part according to Claim 1, **characterized in that** at least one bearing disc (8) has a coaxial elongated hole (31).

3. Articulated part according to Claim 1, **characterized in that** the bearing discs (8) are formed as punched parts.

4. Articulated part according to Claim 1, **characterized in that** the bearing discs (8) are identical.

5. Articulated part according to Claim 1, **characterized in that** the pivot pin (6) is provided with a rotation stop (11).

6. Articulated part according to Claim 1, **characterized in that** the plastic injection-moulded part (1.1) is provided with an injection-moulded threaded insert (12) for a spring force adjusting device (13).

7. Articulated part according to Claim 1, **characterized in that** the bearing discs (8) are each covered with an identical cladding part (14, 14).

8. Articulated part according to Claim 1, **characterized in that** the plastic injection-moulded part (1.1) is provided with an articulated-arm closing part (15).

## Revendications

1. Partie articulée (1) pour un support (2), comprenant un bras articulé (3) pouvant tourner axialement et pivotant en hauteur, la partie articulée (1) présentant un pivot (6) qui peut être connecté, au moyen d'une partie de connexion (4) sur un support (5), à ce dernier, la partie articulée (1) présentant une articulation basculante (7) pour le bras articulé (3), l'articulation basculante (7) présentant deux disques de palier (8) constitués de tôle métallique, qui présentent une ouverture (9) approximativement au centre, les disques de palier (8, 8) étant encastrés dans la partie articulée (1) parallèlement l'un à l'autre à une distance (A),
**caractérisée en ce que**
la partie articulée (1) se compose d'une pièce (1.1) venue de moulage par injection de plastique, qui forme le pivot (6) et le boîtier de l'articulation basculante (7), et dans laquelle sont encastrés, de manière non rotative, les disques de palier (8), dont les ouvertures (8) forment avec une tige d'articulation (38) un palier d'articulation (10) pour l'articulation basculante (7).

2. Partie articulée selon la revendication 1, **caractérisée en ce qu'**au moins un disque de palier (8) présente un trou oblong coaxial (31).

3. Partie articulée selon la revendication 1, **caractérisée en ce que** les disques de palier (8) sont estampés.

4. Partie articulée selon la revendication 1, **caractérisée en ce que** les disques de palier (8) sont identiques.

5. Partie articulée selon la revendication 1, **caractérisée en ce que** le pivot (6) est pourvu d'un dispositif d'arrêt de pivotement (11).

6. Partie articulée selon la revendication 1, **caractérisée en ce que** la pièce (1.1) moulée par injection de plastique est pourvue d'un insert fileté surmoulé (12) pour un dispositif d'ajustement de la force de ressort (13).

7. Partie articulée selon la revendication 1, **caractérisée en ce que** les disques de palier (8) sont chacun recouverts d'une pièce d'habillage identique (14, 14).

8. Partie articulée selon la revendication 1, **caractérisée en ce que** la pièce (1.1) moulée par injection de plastique est pourvue d'une pièce de fermeture du bras articulé (15).
